# EUROPEAN PATENT APPLICATION

(11) **EP 1 402 929 A1**
(43) Date of publication of application: **31.03.2004**
(21) Application number: 03021353.2
(22) Date of filing: 22.09.2003
(51) Int. Cl.: A63F 13/02

(54) **An apparatus and a method for more realistic interactive video games on computers or similar devices**

(30) Priority: 30.09.2002 US 262289
(71) Applicant: Wang, Xiaoling, 90765 Fürth (DE)
(72) Inventor: Wang, Xiaoling, 90765 Fürth (DE)

(57) **Abstract**

An apparatus is disclosed comprising a computing device, a screen device, and a first marking device comprised of a lighting device. The lighting device is comprised of one or more light sources that emit light. The computing device uses the light emitted from the one or more light sources to determine a pose of an object attached to the first marking device, and uses the pose of the object to determine and control the pose and the action of a virtual object in the computing device or on the screen device.

## Description

### Field of the invention

This invention relates to the field of systems and methods for video games, and in particular to the field of interactive video games. Interactive video games are typically comprised of computer software that is run on computers or similar devices.

### Background of the Invention

Video games are popular and entertaining. Video games are typically comprised of computer software that is run on computing devices, such as personal computers, or specially designed game machines, such as the PLAYSTATION (trademarked) from SONY (trademarked) and the XBOX (trademarked) from MICROSOFT (trademarked). However, most video games use computer peripherals, such as a keyboard, a mouse or a joystick, or a game pad or other game control device to play video games. These types of peripheral devices make many video games somewhat less realistic. For boxing games, for example, it is much more interesting and realistic if a boxing game player can simply use his/her own fists, just like in a real boxing game, to virtually punch his/her opponent displayed on a screen, instead of using a keyboard, a mouse, a joystick, or a game pad. (Please note we will use the term "object pose" instead of the more commonly used term "object position" throughout the present invention, since an object pose actually includes both object position and orientation information in space. Only if the object orientation information is not needed or relevant, we will use the term object position to describe the position of an object in space.) The fist pose of the game player can be used to control the fist pose of the virtual boxer, often completely or partially displayed on a screen or screen device, representing the game player in an interactive video boxing game. When the game player moves his fists, the fists of the virtual boxer in the game move accordingly in the game space or on the screen. Therefore, by moving his/her fists in real space, the game player can hit or miss his/her opponent in the game via the fists of the virtual character (boxer) representing him/her. However, due to the very limited visual space on a screen, sometimes only the two fists of a virtual boxer are shown. In extreme cases, the two fists of the virtual boxer may even be hidden. This allows a maximized free screen space available for showing most details of the opponent in the video boxing game. Therefore, it should be understood that the virtual boxer or his/her fists may not always be displayed on the screen. But the virtual boxer and his/her virtual fists does exist as data in the game stored in the computing device. Therefore, even when the virtual fists are not shown, a game player may still use his/her real fists to control the pose of the virtual fists.

In fact, the above-mentioned concept can also be used for other interactive video games, such as an enhanced dancing pad game. A regular dancing pad game works like this: A game player listens to the music and watches for dancing instructions displayed on a dancing pad placed on a floor. The dancing pad flashes lights as dancing instructions in some areas of the dancing pad where the game player must step on. The sensors built in the dancing pad detect if the game player has correctly stepped on indicated areas at the right time. If the game player does step on the indicated dancing areas at the right time, the player will be rewarded with points (higher score). Otherwise, the player will not be rewarded, or may even be punished with a lowered score. The goal of the game is to dance on the dancing pad as directed by the game as correctly as possible for achieving high scores. This game is gaining popularity recently because of its duality of entertainment and physical exercise. The dancing pad game players can enjoy nice dancing music, learn dancing, and do physical exercise all at the same time. However, the regular dancing pad game discussed previously involves only the dancing movements of legs.

There are video based pose determination devices in the prior art based on passive markers. Passive markers are usually made of light reflective materials or covered by light reflective materials. By illuminating the markers with a bright light source that can be reflected by the markers, the markers shine bright due to their reflective surfaces. Video cameras can be used to capture the pose of those passive markers. When the markers are attached to a human body, the movement of the human body can be captured by determining the poses of those attached markers at consecutive time instances. The main advantage of passive markers is the fact that no power inside a passive marker is needed to make them shine. Only one or more external suitable illumination sources are needed. Therefore, the passive markers are normally used when many of those markers are needed for capturing complex movement of a complex object, such as a human or an animal. The disadvantage of a passive marker is the fact that they normally require some special high-powered external lighting, and a reasonably controlled lighting environment, which may not be available or suitable to home game players. In addition, the commonly used markers are not selectively reflective. They reflect the color of the light source. That means they usually take the same color as the external lighting.

### Summary of the Invention

The present invention, in one or more embodiments, introduces a new and enhanced dancing pad game that requires for example coordinated leg and hand movement. In one or more embodiments both leg and hand movements of the game player need to be monitored. While the leg movement can still be detected and monitored by the sensors within the dancing pad itself just as in the prior art, additional sensors may be needed to determine the hand movement. Since the hand movement is in the air, touching or pressure sensors cannot be used effectively. Since a video camera is the simplest and the most efficient sensor for determining free movements of objects in space, the present invention provides a video camera to capture images from a dancing pad game player and the present invention uses a video based pose determination device to monitor the pose of both hands of the player.

For both boxing and enhanced dancing pad games, it is important to be able to separate and recognize the movement of the left hand from the right hand of a game player. Therefore, a video based pose determination device in accordance with an embodiment of the present invention should also have the ability to quickly distinguish the signals from the left or the right hand. In general, a video based pose determination device in accordance with embodiments of the present invention should have the ability to quickly distinguish the signals from different body parts of interest.

For efficient video based pose determination, visual markers can be used. Visual markers allow fast and accurate object position detection and easy separation of objects of interest from background clutters.

For embodiments of the present invention, such as for the boxing game or the enhanced dancing pad game, the markers with different colors can help quickly distinguish the movement from the left or the right hand. In addition, only a few markers are needed in targeted applications of the present invention, such as the boxing or an enhanced dancing pad game. Therefore, it is preferable for embodiments of the present invention to use active markers with different colors or shapes for tracking the movements of different body parts, such as a person's left or right fist or hand. Active markers are defined as markers which have their own internal light sources so that no external lighting is necessary to make them shine.

The present invention in one embodiment comprises a computing device, a video sensing device, a screen device, and at least one marking device comprised of one or more light sources that are a part of and fixed to the marking device. The computing device is typically electrically connected to the screen device. A video camera may be used to capture video images of the marking device with the one or more light sources. The computing device uses the captured video images from the one or more light sources of the lighting device to determine the pose of the marking device. The video sensing device may be electrically connected to the computing device and may provide data about the one or more light sources of the marking device to the computing device.

In at least one embodiment of the present invention the apparatus is comprised of at least two marking devices. Each of the light sources of the first marking device may emit light of a first color and each of the light sources of the second marking device may emit light of a second color, wherein the first color and the second color are different.

The present invention also includes a method of using light from one or more light sources fixed to a first marking device to determine the location of the marking device in space. The method may include capturing an image of the marking device through the use of a video camera.

The present invention in one or more embodiments discloses a new system that may use a low-cost video camera, such as a typical web cam, for capturing video images of a marking device instead of a human body itself. From the captured video images, the pose of the marking device in space can be determined. Since the marking devices are directly attached to the human body parts to be monitored, such as the fist or the hand of a game player, their poses can also be determined. It provides a more cost effective and practical solution for game players using their computers or similar devices at home.

The present invention is designed to provide a system and a method that can make video games, which employ one or more marking devices, much more realistic on computers and/or similar devices.

A system, apparatus, and a method according to the present invention uses one or more marking devices containing one or more light sources. A game player uses a marking device to reveal the pose of his/her body parts, such as his/her right fist or hand. A typical low-cost video camera mounted on top of or near the screen device, captures video images containing images of the light emitted from the light sources of lighting device of the marking device. When the pose of the marking device has been determined from the captured video images, the pose information of the marking device can then be fed to the video game software running on the computing device, and the video game software can determine if a visual target is "hit" or not in case of a boxing game, and can react accordingly. In the case of an enhanced dancing pad game, the video game software running on the computing device will determine if the positions of both hands of a game player are as directed by the game, and react accordingly.

A video boxing and an enhanced dancing pad game are disclosed as application examples or embodiments of the present invention. However, it is important to point out that the present invention can be used for a wide range of interactive video games, such as:
(1) Boxing and enhanced dancing pad games. The pose of fists or hands of a player need to be determined.
(2) Various video ball games, such as basketball, tennis, table tennis. The movement of one or both hands of a player need to be determined for most ball games.
(3) Video shooting games. Marking devices need to be attached to mock shooting devices for accurate shooting position determination.

The system, apparatus, and method in accordance with embodiments of the present invention offer the following advantages:
(1) The video camera needed for the system can be a general-purpose, low cost video camera that can be used for many other applications, such as video-conferencing. A game player may be able to use his/her existing web cam for playing video games more realistically.
(2) When the lighting device has sufficient brightness, which is easily achievable with LEDs (light emitting diodes), the environment lighting condition under which the video game is played does not need to be constrained. The environment lighting condition for systems using passive markers or without markers needs much stricter consistency and constraints.
(3) The marking device does not need a cable to connect to the computing device. This imposes less movement constraints and provides a greater possible game playing distance range.

### Brief Description of the Drawings

Fig. 1 is a perspective view schematically illustrating the overall structure of the preferred embodiment of the present invention;
Figs. 2A and 2B illustrate point and area light sources shown in video images;
Figs. 3A-3D are perspective views schematically illustrating marking devices with triangular shaped light source and the typical use of such marking devices;
Figs. 3E-H are perspective views schematically illustrating marking devices with rectangular shaped light sources and the typical use of such marking devices;
Fig. 4 is a block diagram schematically illustrating a pose determination device for one marking device;
Fig. 5 is a block diagram schematically illustrating a pose determination device for two marking devices with different colors;
Fig. 6 is a perspective view schematically illustrating the overall structure of another embodiment of the present invention;
Figs. 7A-B are perspective views schematically illustrating a dumbbell-shaped marking device and the typical use of such a device, respectively;
Fig. 8A is a perspective view schematically illustrating the handle of a marking device for a video boxing game and the use of the handle for holding batteries and a switch device;
Fig. 8B is a perspective view schematically illustrating the handle of a dumbbell-shaped marking device and the use of a handle for holding batteries and a switch device;
Fig. 9A is a perspective view schematically illustrating another embodiment of the marking device for the video boxing game with only a flexible member and no handle;
Fig. 9B is a perspective view schematically illustrating a lighting device with places for holding two button batteries and a switch device; and
Fig. 10 is a perspective view illustrating a lighting device attached to a glove in accordance with another embodiment of the present invention.

### Detailed Description of the Invention

The present invention in one or more embodiments provides a solution that can make boxing, dancing video games, or other action or movement video games, much more realistic on computers or similar devices, such as the PLAYSTATION (trademarked) from SONY (trademarked), that contain at least one processor, a memory device and/or a storage device, a monitor or a display screen, such as a television set, a low cost video camera, and some input devices, such as a game pad, and/or joysticks.

A system, apparatus, and method according to the present invention use a marking device with a lighting device. A game player fixes the marking device to his/her intended body part, such as his/her right hand or right fist. When the marking device is turned on, the lighting device shines. The lighting device includes one or more light sources and is mounted on or built in the marking device.

A system, apparatus, and method according to the present invention uses a commonly available low-cost video camera, such as a web cam, mounted on top of or near a screen device, such as a computer monitor or a TV set, to capture the video images containing the light from the lighting device. For a boxing video game, the pose of the real fist of a game player can be determined from the captured video images containing the marking device with the lighting device turned on. The pose can then be fed to the boxing video game computer software. The boxing video game then uses the determined pose of the real fist of a game player to control the pose of the virtual fist of a virtual character representing the real game player in the video game. The boxing game software further determine if a target is actually hit or not by the virtual fist, and where of the target object has been hit. It should be noted that hereinafter the word "hit", used throughout this application, is meant to be a hit of an object in a video game by a virtual fist representing the actual fist of a boxing game player, instead of an actual hit in a physical sense.

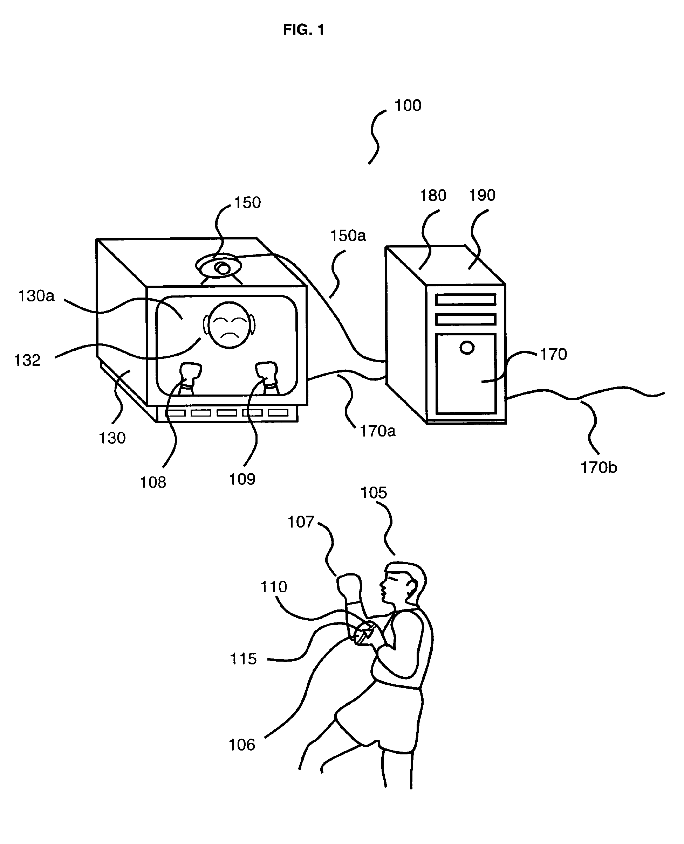

A perspective view of a system, apparatus, and method according to one preferred embodiment of the present invention is shown in Fig. 1. Fig. 1 shows an apparatus 100 comprised of a marking device 110 that is attached to a human body part, such as a fist 106, in this case the left fist, of a live human boxing video game player 105, a screen device 130, a video camera 150, and a computing device 170. The computing device 170 may be a personal computer or a game console machine. The screen device 130 is electrically connected to the computing device 170 by communications line 170a. The video camera 150 is electrically connected to the computing device 170 by communications line 150a. The communications lines 150a and 170a may be comprised of wireless connections, hardwired connections, optical connections, software connections, or any other known communication connections.

The marking device 110 includes a lighting device 115. The lighting device 115 may be comprised of one or multiple light sources. The screen device 130 can display target objects, such as the head 132 of a boxing opponent, to be hit at, and two virtual fists 108 and 109, of a virtual boxer representing the game player in the game space. The video camera 150 may be used to capture video images from the marking device 110 with the lighting device 115 turned on. The video camera 150 may be mounted onto the screen device 130. The computing device 170 may be comprised of a pose determination device 180, which may be comprised of computer software, which is part of and is running on the computing device 170. The pose determination device 180 may determine the pose of the fist 106 of the boxing game player 105 via the marking device 110. The pose information of the real fist 106 of the game player 105 is then passed to computer game software 190 running on computing device 170 that controls the pose of a virtual fist in the boxing video game. That means that the virtual boxer representing the game player 105 in the video boxing game will move his fists 108 and 109 similarly as the movements of the fists, such as fist 106 and 107, of the real live boxing game player 105 (the movements of an object can be seen as the object is placed at a sequence of positions at consecutive time instances). The two virtual fists 108 and 109, of a virtual boxer representing the game player may be moved to hit or miss the head 132 of the virtual boxing opponent.

The light from the lighting device115 is usually non-directional so that the light can be observed from a large range of directions. For this reason, the light source which makes us the lighting device 115 may be typically comprised of a plurality small light bulbs or small LEDs (Light Emitting Diodes). The screen device 130 includes a screen 130a on which visual target objects, such as target object 132 (the virtual opponent's head), and virtual fists, 108 and 109 representing the real fists of a game player, are displayed. The computing device 170 is also responsible for running the boxing video game computer software program 190, which may be comprised of computer software, that displays visual target objects to be hit at on the screen 130a and reacts accordingly depending on whether a visual target object has been hit or not by a virtual fist, such as fist 108, of a virtual boxer representing a real live boxing game player such as player 105. With some exceptions, the video boxing game 190 may be similar to those prior art video boxing games which are typically comprised of computer software and which run on computers. One of the differences of embodiments of the present invention with the prior art is how the fist pose of a boxing game player, such as the player 105, is input into the computing device 170. The system and method according to the present invention allow a game player 105 to use his/her own fist with a marking device 110 and a video camera 150 for inputting the fist pose information realistically while most conventional prior art games use a keyboard, mouse, game pad or joysticks.

In operation, referring to Fig. 1, the game player 105 starts the video boxing game 190 stored in the computing device 170. The video boxing game 190 may be initially supplied to the computing device 170 via compact disc, floppy disc, downloaded from the internet, or from another computer or a server computer connected to the computing device 170 via a network, or in any other known manner. The boxing game 190 displays scenes with one or more visual target objects, such as a human opponent's face 132 and possibly one or two virtual fists representing the fists of a game player in the game space, on the screen 130a via the communication line 170a. Typical examples of the communications line 170a are a common video display cable and the Universal Serial Bus (USB) cable version 1.1 and 2.0 for computer monitors, and composite video, S-Video or RGB (Red, Green, Blue) video cables for television sets. The computing device 170 may further be connected with other computing devices and systems via a network line 170b. Typical examples of the network line 170b are an Ethernet cable or USB cable for connecting local computers, phone, DSL (Digital Subscriber Line), and cable modems and T1 lines for connecting remote computer networks. The game player 105 uses his/her fist, such as fist 106, with the marking device 110 to control the movement of the virtual fist 108 to hit at the displayed target objects, such as target object 132 provided by the video boxing game 190 on the screen 130a. The lighting device 115 on the marking device 110 has to be turned on, before the game player 105 starts a game. The lighting device 115 is rigidly mounted on or integrated within the marking device 110. The video camera 150 placed on top of the screen device 130 captures video images from the lighting device 115 and sends the video images through communications line 150a to the computing device 170. The video camera 150 may also be placed elsewhere as long as the video camera 150 is facing the game player 105 and it is near the screen device 130. Typical and common examples of the communications line 150a are the Universal Serial Bus (USB) cable version 1.1 and 2.0, or cables made according to the IEEE (Institute of Electrical and Electronics Engineers) 1394 standard, such as the FIREWIRE (Trademarked) and the ILINK (Trademarked and copyrighted). A pose determination device 180 running on the computing device 170 then processes the captured video images. The pose determination device 180 determines at first the pose of the lighting device 115 of the marking device 110, in the video images. Based on the computed pose of the lighting device 110, the pose of the fist 106 with the marking device 110 in space can easily be calculated since they are attached to each other. The current pose of the fist 106 is then passed to the video boxing game 190, which translates the pose of the fist 106 in real space into the pose of a virtual fist 108 in the game space. This is somewhat similar to what current video game computer software is doing, namely, translating mouse or keyboard or game pad control signals into the movements or actions of a virtual character in the game space. Since the video boxing game computer software 190 knows where a target object 132 located and where the virtual fist 108 is moving towards, it can easily determine whether the visual target object 132, has been hit or not, and further where has been hit, by the virtual fist 108 and reacts accordingly.

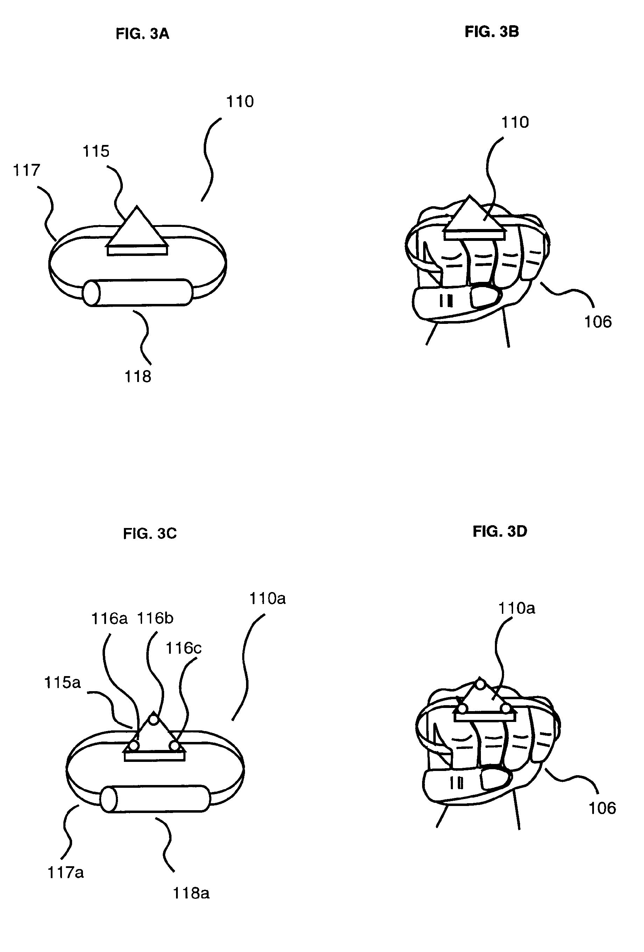

As mentioned previously, the pose of a real fist, such as real fist 106, shown in Fig. 3A, which may be the same or similar to real fist 106 of a game player 105 in space is determined indirectly via the pose estimation of the lighting device 115 of the marking device 110. This method reduces the computational complexity and improves the robustness of the method significantly. The advantages can be summarized as follows:
(1) No difficult object and background separation problem. The pose estimation of a general three-dimensional object, such as the fist 106 in Fig. 3A or the fist 106 in Fig. 1, in space, is not always simple. The object and background separation problem in general is regarded as a difficult computer vision problem that is not always easily solvable. However, if the lighting device 115 has been turned on, the light sources, such as light sources 116a, 116b, and 116c in Fig. 3C, will be imaged as bright blobs in video images. Bright blobs are in general very easily detectable and hence quickly separable from a background if the background does not contain any additional bright light sources in similar color, shape and brightness. This assumption is usually not difficult to be satisfied in a home environment.
(2) Low localization complexity of feature points. For object pose estimation, object feature points, such as edges, junctions and corner points, should first be localized. In general, these image feature points take longer to compute than the detection of simple bright blobs generated by a lighting device with several point or area light sources. That means that the object pose estimation using an active marking device with a lighting device, such as lighting device 115, turned on can be performed in general much faster. This is very important to practical use of this technology.
(3) Furthermore, bright blobs can be detected more reliably than common image feature points, such as edges, junctions and corner points. This is especially true if the image contrast is low and the noise level is high (when the image is taken under a low illumination condition). This is also important for practical use of this technology.

As discussed above, the lighting device 115 plays a significant role for performing the pose estimation of the fist, such as fist 106, of a game player, such as player 105. One of the concerns is how many points many points are needed to estimate the pose of the marking device 110 or the lighting device 115. Fortunately, there is already an answer to this question. As known in the art and as stated, for example, in the reference by M.L. Liu and K.H. Wong, "Pose estimation using four corresponding points", Pattern Recognition Letters, Vol. 20, 1999, pages 69-84, which is incorporated by reference herein, three non-collinear corresponding points (i.e. three image points that are not arranged along a single line in space) are sufficient for the pose estimation of an object. However, in order to make the pose estimation more reliable, four or more points may be helpful. For example, a method with four points is proposed in the reference by M.L. Liu et. Al cited above. The proposed method works with four non-collinear (i.e. all points are not arranged along a single line in space) points that can either be co-planar (i.e. all points are arranged along a single plane in space) or non-coplanar (i.e. all points are not arranged along a single plane in space). The proposed method may also be extended to handle more points. Because the pose estimation problem with image points is a well-known and solved problem, details will not be described in this invention and can be found in the cited reference of M. L. Liu et al.. It is important to point out that the cited reference only serves the purpose of a common reference. It does not indicate in any way that the method is the preferred one, but only that it can be used with the system and the method according to the present invention. Therefore, it is concluded that a minimum of three non-collinear point light sources should be used for the lighting device 115. For better accuracy, four or more non-collinear point light sources may be used.

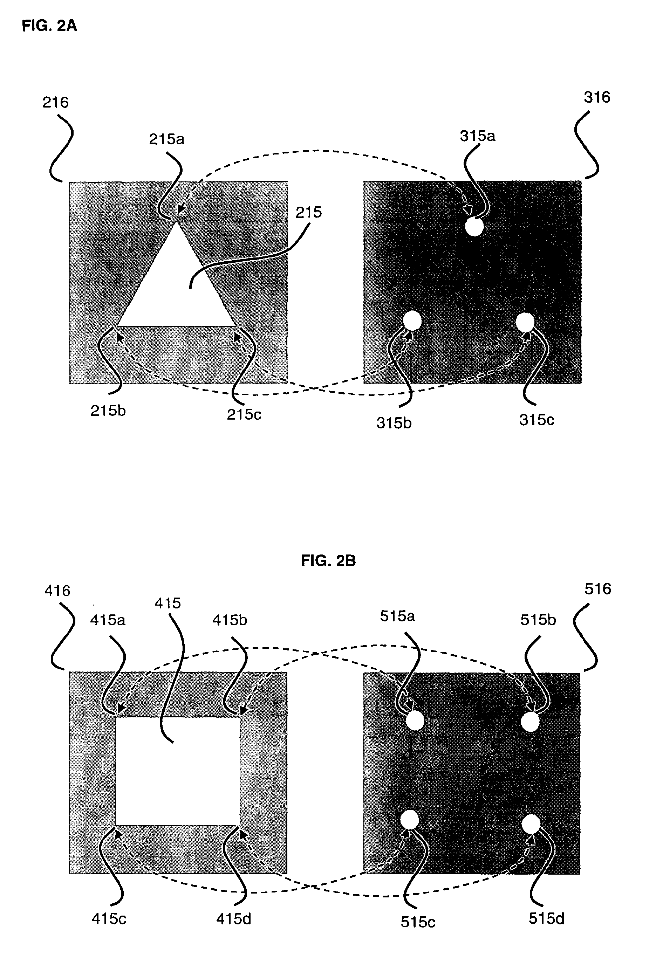

There are two common types of light sources, which may be used for performing our pose estimation. A point light source is a light source with a very small and isolated, most likely rounded lighting area that represents only a few bright pixels or a very small bright spot in a video image. Typical examples of point light sources in a video image are shown and marked as point light sources 315a, 315b, and 315c in a video image 316 in Fig. 2A. The position of a point light source, such as point light source 315a in a video image, such as video image 316 can easily be localized through determining the position of the centroid of a small and isolated bright blob. For a point light source, the shape of a point light source, such as the point light source 315a, is normally not used or evaluated for pose estimation due to its compact size. As mentioned previously, we typically need at least three point light sources for estimating the pose of the marking device 110. In contrast, for an area light source, such as a light source in the shape of a triangle or a rectangle, such as triangular light source 215 in video image 216 in Fig. 2A and rectangular light source 415 in video image 416 shown in Fig. 2B, respectively, the light source's shape may be used for computing the position and the orientation of the light source. In general, one area light source with, say three or four, corners, can be seen as equivalent to three or four point light sources, respectively. As shown in Fig.2A, for example, the three corner points, 215a-c, of a triangular-shaped area light source 215 can easily be extracted and these three extracted corner points can be viewed as similar to the three point light sources 315a-c, arranged in a triangular shape. Similarly, a rectangular area light source 415, shown in Fig. 2B, has four corner points, 415a-d, that can be seen as or equivalent to four co-planar point light sources 515a-d.

Therefore, one triangular area light source may be sufficient to satisfy the minimum condition of three point light sources for the pose estimation, as mentioned previously. Depending on the design of the marking device 110, the lighting device 115 may be comprised of point light sources, area light sources, or a combination of both. In general, more light sources lead to more accurate and robust position estimation. However, on the other hand, more light sources mean possibly longer computational time (more bright blobs to be found in a video image), higher production cost and energy consumption.

Some details about the marking device 100 will now be discussed and also it will be illustrated how the marking device is typically attached to a fist, such as fist 106, for video boxing games, such as game 190.

Fig. 3A shows a detailed view of a marking device 110. Fig. 3B shows a view of a marking device 110 held by or attached to a fist 106. The marking device 110 includes a lighting device 115, a flexible member 117, and a handle 118. The marking device 110 can easily be attached to the fist 106. The lighting device 115 is comprised of or is a triangular-shaped area light source.

Fig. 3C shows a detailed view of a marking device 110a. Fig. 3D shows a view of the marking device 110a held by or attached to the fist 106. The marking device 110a is comprised of a lighting device 115a, a flexible member 117a, and a handle 118a. The lighting device 115a is comprised of three point light sources, 116a-c, arranged in a triangular shape.

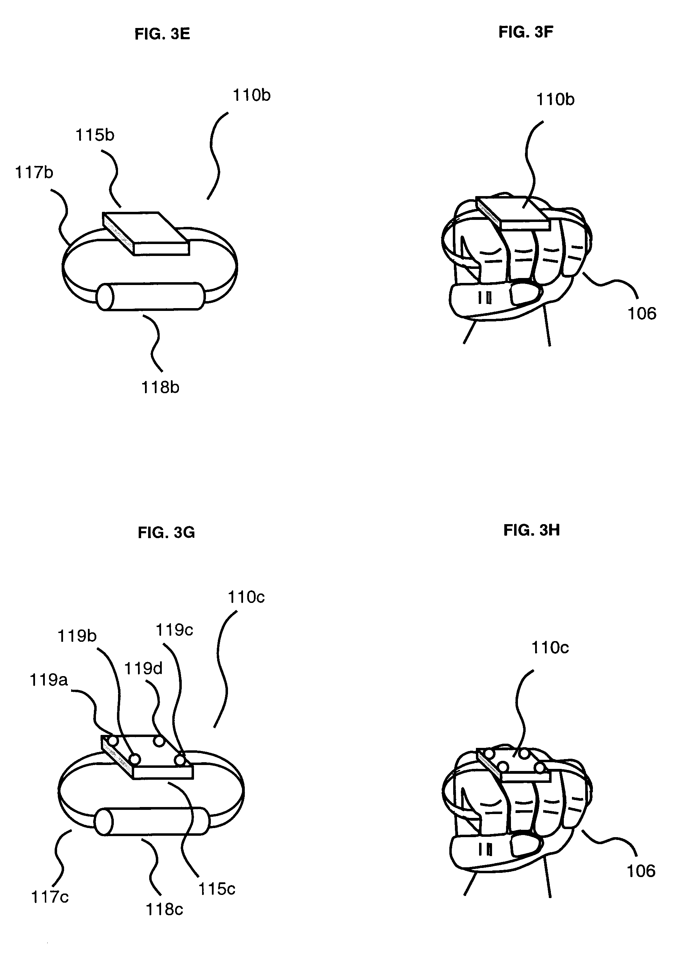

Figs. 3E-3G are similar to Figs. 3A-3D, respectively, except that the shape of the lighting devices 115b and 115c is rectangular instead of triangular. Fig. 3E shows a detailed view of a marking device 110b. Fig. 3F shows a view of a marking device 110b held by or attached to the fist 106. The marking device 110b includes a lighting device 115b, a flexible member 117b, and a handle 118b. The marking device 110b can easily be attached to the fist 106. The lighting device 115b is comprised of or is a rectangular-shaped area light source.

Fig. 3G shows a detailed view of a marking device 110c. Fig. 3H shows a view of the marking device 110c held by or attached to the fist 106. The marking device 110c is comprised of a lighting device 115c, a flexible member 117c, and a handle 118c. The lighting device 115c is comprised of four point light sources, 119a-d, arranged in a rectangular shape.

Please note, the lighting devices, such as 115, 115a, 115b, and 115c, shown in Figs. 3A-3H, are only typical examples. Lighting devices with other shapes and forms can also be used, such as a general polygonal shape. Triangular and rectangular shapes shown in Figs. 3A-H are the special cases of a general polygonal shape.

A lighting device may in general also contain both area and point light sources in a mixed way. One lighting device may for example be comprised of a polygonal shaped area light source in one color but with an additional one point light source in another color located in the center of a polygonal shaped area light source. Such a lighting device may in general be localized more robustly, because such a color combination is more easily to be seen and is also more unique in space. This is especially useful when the background in which the game player is playing contains other light sources. For example, if only one area light source in red color is used by the lighting device, and there are some other light sources in the background having similar red colors, then a detection algorithm may be confused by those additional light sources in the background. Now if a combination of red area light source and a yellow point light source is used by a lighting device, the detection algorithm will not be confused by the same red light sources in background because it can check if a localized red blob contains actually a small yellow blob. By doing so, the background light sources can easily be distinguished from the light of an actual lighting device the system is looking for. Similarly, unique color combinations can also help if more than one lighting device are used. For example, one may use a lighting device with a red area light source and a green area light source for his/her left and right fist, respectively. Both lighting devices may contain in addition also a yellow point light source at the center of the area light sources. These two unique color combinations, namely red with yellow and green with yellow, can easily be distinguished by the system for separating signals from both fists and at the same time not easily be confused by additional red and green light sources in the background. On the other hand, if a game player can keep his/her playroom background clean without additional light sources, the above mentioned color combinations may not be necessary. A single colored lighting device in this case is generally sufficient for marking one object.

Although all lighting devices described above have a flat distribution of light sources (with all light sources arranged in a plane), a lighting device may in general also have a three-dimensional distribution of light sources. One may for example construct a lighting device with multiple point light sources that are not arranged in a plane, or an area light source with one or more point light sources that are not placed in the same plane.

As discussed above, if more than one marking devices are used for marking a plurality of objects, different characteristics of the lighting devices, such as color, color combination, shape, combinations of different colors and shapes, may be used for different marking devices. They allow easy and fast localization and separation of the signals from different objects to be tracked.

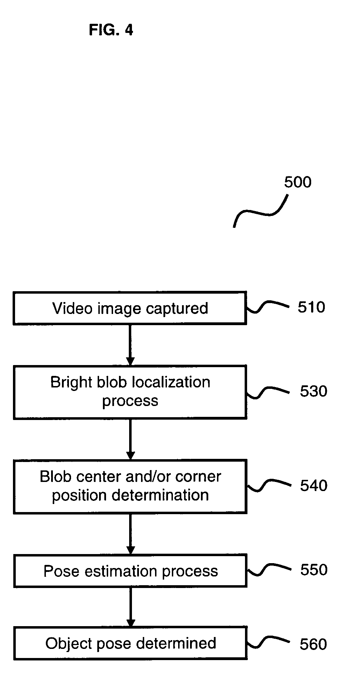

Fig. 4 shows a flow chart 500 illustrating a method that can be executed by a pose determination device running on computing device 170, such as the device 180 shown in Fig. 1, for determining the pose of an object, such as a fist 106 of a game player 105, with the marking device 110. At step 510 a video image is captured. The video image may be captured by video camera 150, which then transmits data via the communications line 150a to the computing device 170. The captured video image may be subjected to a bright blob localization process by pose determination device 180 at step 530. The computing device 170, which runs the pose determination device 180 computer software, may scan through the whole captured video image pixel by pixel and may compare a pixel intensity value with a given or computed threshold value which may be stored in memory of the computing device 170. Pixels with intensity value greater than the threshold value may be identified as "bright" pixels by the computing device 170. If the computing device 170 cannot find any bright pixels in the image, the computing device 170 determines that the marking device 110 was not turned on when the captured video image was captured and no further processing is needed. Otherwise, the computing device 170 determines if the detected bright pixels form bright blobs with bright neighboring pixels. This step 530 essentially removes noisy pixels and localizes the bright blobs. The identified bright blobs are then compared with a given expected size range of the bright blobs as well as the given expected total number of bright blobs for verifying the correctness of the blob localization. For example, if a system uses three point light sources in its lighting device and the blob size of each imaged point light source is between five and twenty pixels in diameter, the computing device 170 will check if the total number of bright blobs is three (for three point light sources) and if the diameter of each bright blob is indeed between five and twenty pixels. Only if both checks are successful, the computing device 170 can be certain that the localized bright blobs are indeed coming from the three point light sources of a lighting device 115. Otherwise, the computing device 170 may decide to go back to look for more bright blobs in the image with a lowered brightness threshold value or exit the processing or post an error message. The localized bright blobs are then subjected to a position determination process at step 540 by the computing device 170 for blob center and blob corners. If only point light sources are used in the lighting device, such as in for example, lighting device 115a of Fig. 3C, the computing device 170 at step 540 will perform position determination for each blob center. The center position of a blob can easily be computed by averaging the pixel coordinates of each pixel within the blob. If one or more area light sources are used, the computing device 170 at step 540 will perform corner detection for every given bright blob with a given size and geometric properties. For example, if one rectangular-shaped area light source is used in the lighting device, the computing device 170 will try to localize four expected corners. Since corner detection methods are very common and basic in the computer vision field and described in almost all textbooks about computer vision and image processing, we skip the details for simplicity and clarity of the description. When a mixture of point and area light sources are used, both blob center and corner detections are needed.

The localized center and/or corner points are then passed to a pose estimation process at step 550. At step 550, the computing device 170 takes center and/or corner points as input, and estimates the position and the orientation of the lighting device, such as one of lighting devices 115, 115a, 115b, or 115c, The method works with either point or area light sources. The type of light sources generally only makes a difference in step 540. A good working method for pose estimation with four feature points is well described in the reference by M.L. Liu et al., which is incorporated by reference herein. Since there are many published pose estimation methods that could be used with the present invention without modification, and the description of the pose estimation itself is complicated, the applicant does not apply further detail. After the pose (position and orientation) of the lighting device, such as one of lighting devices 115, 115a, 115b, or 115c of a marking device, such as marking devices 110, 110a, 110b, or 110c, respectively, is determined by the computing device 170 at step 550, the computing device 170 takes the pose information of the marking device from step 550 and passes the pose information to the video game software 190, also running on the computing device 170. The current pose of the virtual fist 108 in the game space is then computed by the video boxing game software 190 based on the input of the current pose information of the real fist in real space. Since the boxing game software 190 always knows the current position of the target object, such as target object 132 in Fig. 1, at any given moment, the software 190 can easily determine if there is a collision between the virtual fist 108 and the target object 132 and where. Finally, the video boxing game 190 reacts accordingly based on if the visual target object displayed on the display screen 130a has been hit by the virtual fist or not, and where. The reaction of a hit can be both audio and visual. The hit could cause the visual target object 132 to show visual feedbacks, such as a face from the opponent, to deform locally, to show emotions such as anger or sadness, or to move on the screen such as screen 130a. It could also cause the object 132 to appear to provide audio feedbacks, such as to say something, shout, or cry, by having sounds emitted from speakers located in the computing device 170

The apparatus 100 shown in Fig. 1 may include a plurality of marking devices, each of which may be identical to the marking device 110 equipped with lighting device 115 using different colors, one color for each body part of a plurality of body parts. If the video camera 150 is a color camera, light sources in different colors can easily be distinguished. For example, for a boxing game with two fists, two marking devices, each like 110, may be provided. The first of the two marking devices may have only red light sources, such as one or more red light sources of a red lighting device and the first marking device may be attached to a left fist of the live human game player. The second of the two marking devices may have only green light sources such as one or more green light sources of a green lighting device, and the second marking device may be attached to the right fist of the live human game player. The pose of the two marking devices may be determined separately by locating the red bright pixels for one of the marking devices and the green bright pixels for the other in the same video images.

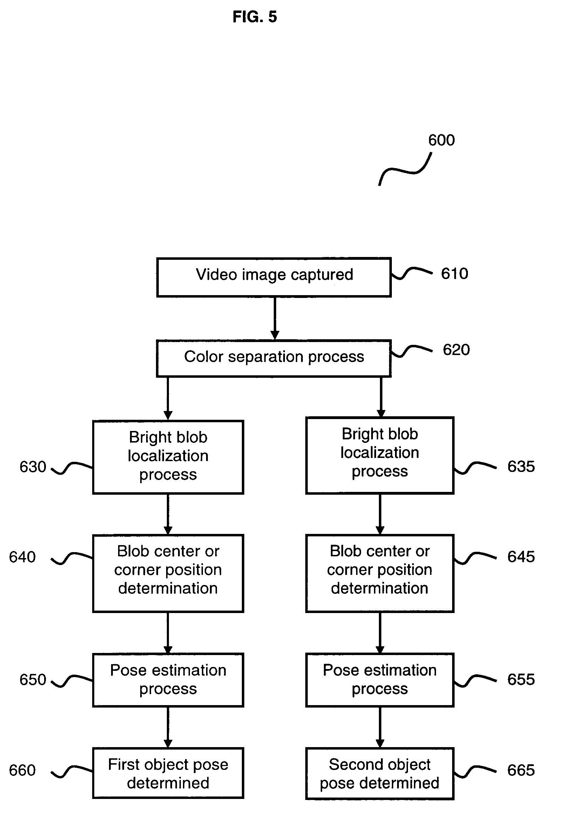

Fig. 5 shows a flow chart 600 illustrating a method that can be executed by a pose determination device, such as device 180, running on computing device 170, such as shown in Fig. 1, for determining the pose of two objects, such as two fists of a game player, with two marking devices that are similar to device 110 but with two different colors. At step 610 a video image is captured. The video image may be captured by video camera 150, which then transmits data via the communications line 150a to the computing device 170. The captured video image may be subjected to a color separation process by pose determination device 180 at step 620. The color separation process separates the input video image into two images representing the two colors of the two lighting devices of the respective two marking devices. That means each image contains only bright blobs of one color. After the color separation process, the two color separated images may be subjected to a bright blob localization process at steps 630 and 635, similar to step 530 in Fig. 4. The rest of the processing steps are very similar to the rest of the processing steps discussed in Fig. 4. The processing steps 630 and 635 are similar to the step 530, steps 640 and 645 are similar to step 540, and steps 650 and 655 are similar to step 550 in Fig. 4. The two identical but separated processes result in a determination of the first object pose 660 and the second object pose 665 to be fed to the video boxing game device 180.

The apparatus 100 shown in Fig. 1 may also include a plurality of marking devices, each of which may employ lighting devices with different shapes, such as 115 and 115a shown in Figs. 3A and Fig. 3C, respectively, one for each part of a plurality of body parts. Light sources in different shapes can also be distinguished easily. For example, for a boxing game with two fists, two marking devices with differently shaped lighting devices, such as 110 and 110a in Figs. 3A and 3C, may be attached to a right and left fist, respectively, of a boxing game player. The pose of the two marking devices may be determined separately by locating one triangular-shaped and one rectangular bright blob.

The apparatus 100 shown in Fig. 1 may further include a plurality of marking devices, each of which may employ lighting devices with different shapes and colors. The main objective here is to design and use lighting devices that can easily be distinguished from each other in video images. In general, the more objects that need to be tracked, the more varieties of different colors or shapes or combinations between colors and shapes may be helpful.

Besides the video boxing game, the present invention in various embodiments can also be used by other types of video games, such as an enhanced dancing pad game. The main task here is to localize the rough positions of both fists of the game player to see if he/she did the correct movement of his/her fists according to the instructions from the dancing pad game software. In this special case, the accuracy of the fist position is not important. It is only important to know if the fist is in the rough area where it should be.

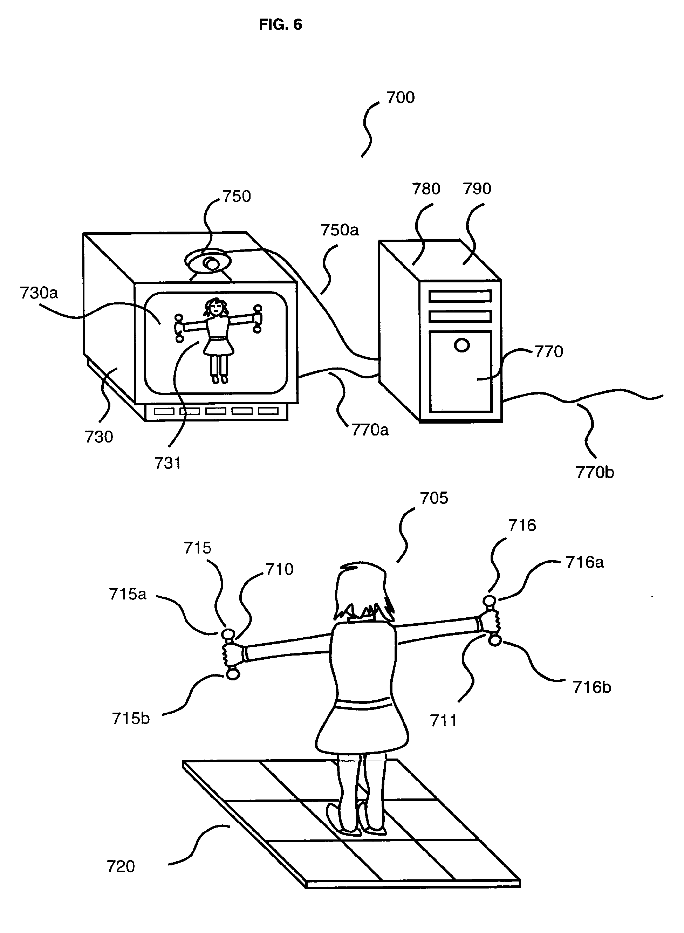

A perspective view of a system, apparatus, and method according to another preferred embodiment of the present invention is shown in Fig. 6. Fig. 6 shows an apparatus 700 comprised of two dumbbell-shaped marking devices 710 and 711 that are held by left and right hands, respectively, of a live human video dancing pad game player 705, a screen device 730, a video camera 750, and a computing device 770. The dumbbell-shaped marking devices 710 and 711 should be held in such a way that their light sources 715a-b an d 716a-b, of lighting devices 715 and 716, respectively, are not covered by the hands. The light source 715a may be at a first end of the dumbbell shaped marking device 710 while the light source 715b may be at a second end of the dumbbell shaped marking device 710. Similarly the light source 716a may be at a first end of the dumbbell shaped marking device 711 and the light source 716b may be at the second end of the dumbbell shaped marking device 711. The light sources 715a-b may be considered to be light sources or lighting devices which are part of an overall lighting device 715. Similarly, the lighting sources 716a-b may be considered to be light sources or lighting devices that are part of an overall lighting device 716. They should be visible to the video camera 750. The computing device 770 may be a personal computer or a game console machine. The screen device 730 is electrically connected to the computing device 770 by communications line 770a. The video camera 750 is electrically connected to the computing device 770 by communications line 750a. The communications lines 750a and 770a may be comprised of wireless connections, hardwired connections, optical connections, software connections, or any other known communication connections.

The marking device 710 includes the lighting devices 715a and 715b. The lighting device 715a and 715b may be comprised of one or multiple light sources. The screen device 730 can display video images, such as the video images of the real dancing game player or a virtual dancer representing the player in the game. The video camera 750 may be used to capture video images from the marking device 710 with the lighting device 715a and 715b turned on and the marking device 711 with the lighting device 716a and 716b turned on. The video camera 750 may be mounted onto the screen device 730. The computing device 770 may be comprised of a pose determination device 780, which may be comprised of computer software, which is part of and is running on the computing device 770. The pose determination device 780 may determine the poses of both hands of a dancing pad game player via the marking devices 710 and 711. The pose information of both hands of a game player is then passed to the computer dancing pad game software that determines if the dancing pad game player has moved his/her hands according to the given instructions.

The light from the lighting device 715a-b and 716a-b is usually non-directional so that they can be observed from a large range of directions. For this reason, a plurality of light sources that can be used for each of the lighting devices 715a-b and 716a-b may typically be small light bulbs or small LEDs (Light Emitting Diodes). The screen device 730 includes a screen 730a on which visual objects 732, such as video images from the real dancer or a virtual dancer, are displayed. The computing device 770 is also responsible for running the enhanced dancing pad game computer software program 790, which may be comprised of computer software, that uses audio or visual instructions to direct a dancing game player to dance and at the same time move his/her hands according to the instructions. The video camera 750 captures the hand movements and passes the determined hand poses to the game software 790. The game software compares with the expected states of both hands of the live player 705 and finally rewards or penalizes the player 705 through scores accordingly. Therefore, the enhanced dancing pad game 790 adds some important enhancements to those prior art video dancing pad games which are typically comprised of computer software and which run on computers. One of the major differences of embodiments of the present invention from the prior art is the ability of embodiments of the present invention to monitor not only the foot movements, but also the hand movements which make the new enhanced dancing pad game more interesting and challenging.

In operation, referring to Fig. 6, a game player, such as player 705, starts an enhanced dancing pad game 790 stored in a computing device 770. The enhanced dancing pad game 790 may be initially supplied to the computing device 770 via compact disc, floppy disc, downloaded from the internet, or from another computer or a server computer connected to the computing device 770 via a network, or in any other known manner. The enhanced dancing pad game 790 gives visual instructions on the screen 730a via the communication line 770a or audio instructions through speakers. Typical examples of the communications line 770a are common video display cable and the Universal Serial Bus (USB) cable version 1.1 and 2.0 for computer monitors, and composite video, S-video or RGB video cables for television sets. The computing device 770 may further be connected with other computing devices and systems via a network line 770b. Typical examples of the network line 770b are the Ethernet or USB for connecting local computers, phone, DSL, and cable modems and T1 lines for connecting remote computer networks. The enhanced dancing pad game player 705 dances and moves his/her hands with the marking devices 710 and 711 according to the instructions provided by the enhanced dancing pad game 790. The lighting devices 715a-b and 716a-b on the marking devices 710 and 711, respectively, have to be turned on, before the game player 705 starts a game. The video camera 750 placed on top of the screen device 130 captures video images from the lighting devices 715a-b and 716a-b, and sends the video images through communications line 750a to the computing device 770. The video camera 750 may also be placed elsewhere as long as the video camera 750 is facing the game player 705 and the video camera 750 is near the screen device 730. Typical and common examples of the communications line 750a are the Universal Serial Bus (USB) cable version 1.1 and 2.0, or cables made according to the IEEE 1394 standard, such as the FIREWIRE (Trademarked) and the ILINK (Trademarked and copyrighted). The captured video images are then processed by a pose determination device 780 running on the computing device 770. The pose determination device 780 determines at first the pose of the lighting devices 715a-b of the marking device 710 and also the pose of the lighting devices 716a-b of the marking device 711, in the video images. Based on the computed poses of the marking devices 710 and 711, the poses of both hands can easily be calculated. The current poses of both hands are then passed to the enhanced dancing pad game 790. The game software compares with the expected states of both hands of the game player 705 and finally rewards or penalizes the player 705 through scores accordingly.

A flow chart for the pose determination of both hands of a dancing game player, such as player 705, is very similar to the flow chart depicted in Fig. 5, with the only difference that the marking devices used in the respective games are somewhat different. All the processing steps are very similar in both cases. We skip the detailed repetitive descriptions for clarity.

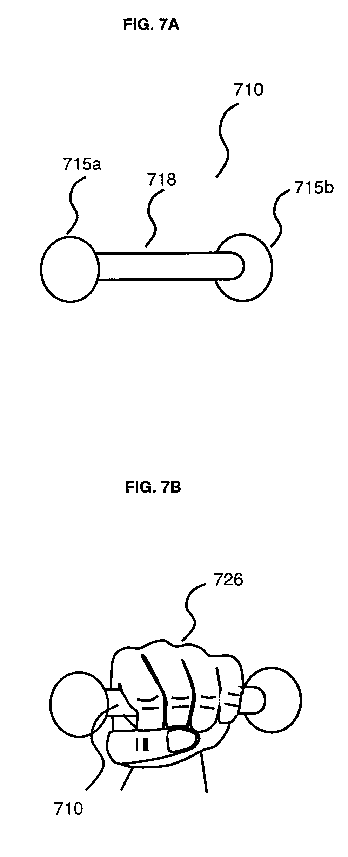

Fig. 7A shows a detailed view of the marking device 710. Fig. 7B shows a view of the marking device 710 held by a hand or fist 726. The marking device 710 contains two lighting device 715a-b. As shown in Fig. 7A, the marking device 710 is typically comprised of two lighting device 115a-b, and a handle 718. The dumbbell-shaped marking device 710 can easily be held by a hand, or fist such as hand or fist 726. The fist 726 with the marking device 710 in a typical position is shown by Fig. 7B. Similarly, a second marking device is needed for another hand. Typically, the only difference between the two marking devices 710 and 711, shown in Fig. 6, is the color of light emitted by their respective lighting devices. In general, the colors should be selected in such a way that the color of light emitted by the marking device 710 is very different from the color of light emitted by the marking device 711 so that the two different colored lights can easily be separated by the color separation step 620 shown in Fig. 6.

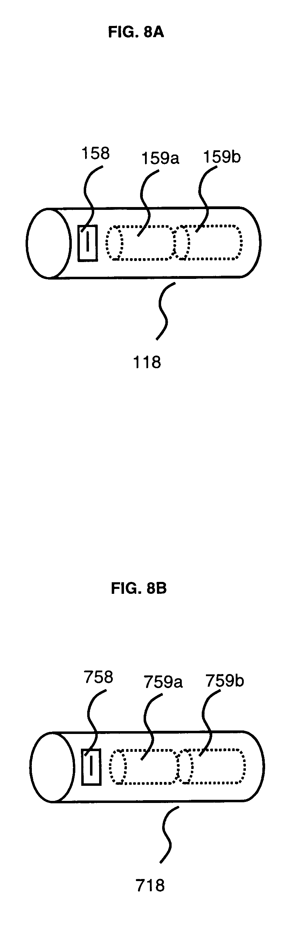

Fig. 8A shows the handle 118 of the marking device 110 of Fig. 3A. The handle 118 may, for example, be used to hold one or more batteries, such as batteries 159a-b, shown in dashed lines in Fig. 8A, and a switching device 158 for the lighting device 115. Handle 118a, 118b, and 118c may each be identical to handle 118.

Similarly, Fig. 8B shows the handle 718 of the marking device 710 of Fig. 7A. The handle 718 may, for example, be used to hold one or more batteries, such as batteries 759a-b, shown in dashed lines in Fig. 8B, and a switching device 758 for the lighting devices 715a-b. Lighting devices 715a-b, or lighting devices 716a-b may be considered to be a single lighting device. Handle 718 for marking device 710 may be identical to a handle for the marking device 711.

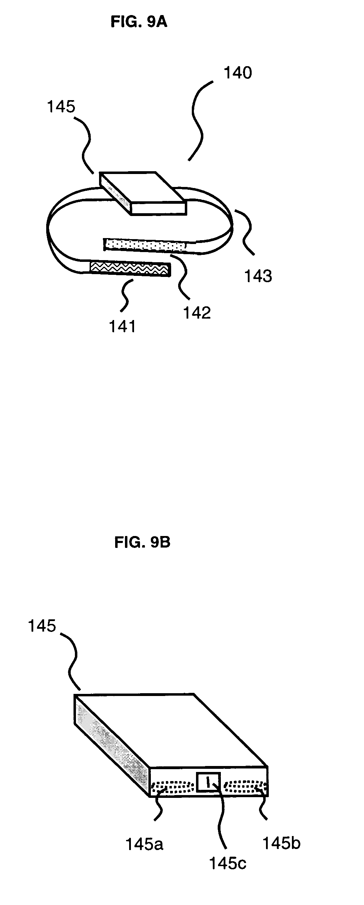

Figs. 9A and 9B depict a marking device 140 in accordance with another embodiment of the present invention. The marking device 140 can be used for the video boxing game 180 of Fig. 1 or other types of video games. The marking device 140 is comprised of a flexible member 143 and a lighting device 145. The flexible member 143 includes two attachment strips or devices 141 and 142. The attachment strips may each be a Velcro (trademarked) sheet. One of the strips, of 141 and 142, may be comprised of a first Velcro (trademarked) portion, such as hooks, and one of the strips of 141 and 142 may be comprised of a mating second Velcro (trademarked) portion, such as loops. The strips 141 and 142 may be located at first and second ends, respectively, of the flexible member 143. The main purpose of the Velcro (trademarked) sheets is to allow for the tightening of the member 143 around different size hands by attaching of connecting the strips 141 and 142 at different positions. The lighting device 145 may include batteries 145a-b and a switching device 145c, which can switch on one or more light sources which are part of the lighting device 145 by electrically connecting batteries 145a-b in a circuit with the one or more light sources. Because there is no handle used in this embodiment, batteries 145a-b and the switching device 145c may be built within the lighting device 145 itself, as shown in Fig. 9B. Because of the limited free space in such a small device, typically only small batteries, and a small switch device can be accommodated. Certainly, other embodiments are also possible. In addition, the number of batteries used in a marking device, such as marking device 140, may also vary depending on the actual needs.

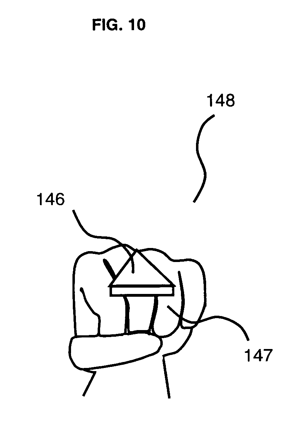

The marking device 140 shown in Fig. 9A may further be simplified so that it may only contain a lighting device itself. A marking device 148 comprised of a lighting device 146 and a glove 147 can be provided as shown in Fig. 10. The lighting device 146 may be similar to previous lighting devices or replaced by other lighting devices previously shown, such as lighting device 115, 115a-c. A lighting device such as one of the lighting devices 115, 115a-c, may be easily attached to glove 147 as shown in Fig. 10, using Velcro sheet or other means. It is also contemplated within the present invention that such a lighting device may also easily be attached to other objects to be marked, such as a golf club for a golf video game, a peddle for a table tennis video game, or a mock shooting device for a shooting video game.

Although the invention has been described by reference to particular illustrative embodiments thereof, many changes and modifications of the invention may become apparent to those skilled in the art without departing from the spirit and scope of the invention. It is therefore intended to include within this patent all such changes and modifications as may reasonably and properly be included within the scope of the present invention's contribution to the art.

## Claims

1. An apparatus comprising
a computing device;
a screen device;
a first marking device comprised of a lighting device;
wherein the lighting device is comprised of one or more light sources which emit light;
wherein the computing device uses the light emitted from the one or more light sources to determine a pose of a real object attached to the first marking device.

2. The apparatus of claim 1 wherein
the computing device uses the pose of the real object to determine and control a pose of a virtual object in the computing device.

3. The apparatus of claim 1 wherein
the computing device uses the pose of the real object to determine and control a pose of a virtual object on the screen device.

4. The apparatus of claim 1 wherein
the computing device uses the pose of the object to determine and control movement of a virtual object in the computing device.

5. The apparatus of claim 1 wherein
the computing device uses the pose of the object to determine and control movement of a virtual object on the screen device.

6. The apparatus of claim 1 further comprising
a video camera that captures video images of the one or more light sources;
wherein the video camera provides data relating to the video images to the computing device.

7. The apparatus of claim 1 wherein
the one or more light sources are comprised of at least three point light sources and the three point light sources are not located in a single line segment.

8. The apparatus of claim 1 wherein
wherein at least one of the one or more light sources is an area light source.

9. The apparatus of claim 8 wherein
the area light source is a polygonal light source.

10. The apparatus of claim 1 wherein
the one or more of light sources are comprised of at least one point light source and at least one area light source.

11. The apparatus of claim 1 wherein
the one or more light sources are comprised of a first light source which has a first characteristic and a second light source which has a second characteristic; and
wherein the first and the second characteristics are different.

12. The apparatus of claim 11 wherein
the first characteristic is comprised of a first color of light which is emitted from the first light source;
the second characteristic is comprised of a second color of light which is emitted from the second light source; and
wherein the first color of light and the second color of light are different.

13. The apparatus of claim 1 further comprising
a second marking device comprised of a lighting device;
wherein the lighting device of the second marking device is comprised of one or more light sources; wherein each of the one or more light sources of the first marking device has a first characteristic;
wherein each of the one or more light sources of the second marking device has a second characteristic; and
wherein the first characteristic and the second characteristic are different.

14. The apparatus of claim 13 wherein
the first characteristic is comprised of a first color of light which is emitted from the one or more light sources of the first marking device;
the second characteristic is comprised of a second color of light which is emitted from the one or more light sources of the second marking device; and
wherein the first color is different from the second color.

15. The apparatus of claim 13 wherein
the first characteristic is comprised of a first spatial configuration of the one or more light sources on the first marking device;
the second characteristic is comprised of a second spatial configuration of the one or more light sources on the second marking device;
and wherein the first spatial configuration and the second spatial configuration are different.

16. The apparatus of claim 13 wherein
the first characteristic is comprised of a first combination color of light from a plurality of light sources of the first marking device; and
the second characteristic is comprised of a second combination color of light from a plurality of light sources of the second marking device; and
wherein the first combination color is different from the second combination color.

17. The apparatus of claim 1 wherein
the first marking device is comprised of a flexible member; and
wherein the flexible member is adapted for attaching the first marking device to objects of variable width.

18. The apparatus of claim 1 further comprising
a handle;
wherein the handle is connected to the lighting device.

19. The apparatus of claim 18 further comprising
a switch device;
wherein the switch device turns on and off the lighting device.

20. The apparatus of claim 18 further comprising
a power source comprised of batteries;
wherein the power source powers the lighting device.

21. An apparatus comprising:
a first marking device comprised of a lighting device;
wherein the lighting device is comprised of one or more light sources which emit light; and
wherein the first marking device includes a first attachment device and a second attachment device which can be attached together to attach the first marking device to a real object.

22. An apparatus comprising:
a first marking device is comprised of a lighting device;
wherein the lighting device is comprised of one or more light sources which emit light; and
wherein the first marking device includes a glove and the lighting device is attached to the glove.

23. A method comprising the steps of
using light emitted from one or more light sources of a first marking device to determine a pose of the first marking device in space.

24. The method of claim 23 further comprising
capturing an image of the light through the use of a video camera.

25. The method of claim 23 wherein
the one or more light sources are comprised of at least three light sources which are not located along a single line segment.

26. The method of claim 23 wherein
the image captured by the video camera is used to determine whether the first marking device is hitting a first spatial location.

27. The method of claim 23 wherein
the one or more light sources are comprised of an area light source; and
using the light emitted by the area light source to determine whether the first marking device is hitting a first spatial location.

28. The method of claim 27 wherein
the area light source is comprised of a polygonal area light source.

29. The method of claim 23 wherein
the one or more light sources are comprised of a first light source and a second light source and
wherein light emitted from the first light source and the second light source is used to determine whether the first marking device is hitting a first spatial location;
and wherein the first light source is a point light source and the second light source is an area light source.

30. The method of claim 26 further comprising
using light emitted from one or more light sources fixed to a second marking device to determine whether the second marking device is hitting a second spatial location; and
wherein the one or more light sources fixed to the first marking device emit light of a first color and the one or more light sources fixed to the second marking device emit light of a second color and wherein the first color and the second color are different.

31. The apparatus of claim 1 wherein
the first marking device is has a first end and a second end; and
wherein a first light source of the one or more light sources is located at the first end of the first marking device and a second light source of the one or more light sources is located at a second end of the first marking device.
